## Europäisches Patentamt

## European Patent Office

## Office européen des brevets

(19)

(11) **EP 0 559 120 B1**

(12) **EUROPÄISCHE PATENTSCHRIFT**

(45) Veröffentlichungstag und Bekanntmachung des Hinweises auf die Patenterteilung:
**19.06.1996 Patentblatt 1996/25**

(51) Int Cl.⁶: **G01B 11/02**, G01N 21/17, G01S 17/02, G01S 7/48

(21) Anmeldenummer: **93103234.6**

(22) Anmeldetag: **01.03.1993**

(54) **Verfahren und Vorrichtung zur Abstandsmessung**

Procedure and device to measure distances

Procédé et dispositif pour mesurer des distances

(84) Benannte Vertragsstaaten:
**CH DE ES FR GB IT LI**

(30) Priorität: **02.03.1992 DE 4206499**

(43) Veröffentlichungstag der Anmeldung:
**08.09.1993 Patentblatt 1993/36**

(73) Patentinhaber:
- **Häusler, Gerd, Prof. Dr.**
  **D-91056 Erlangen (DE)**
- **LCTec Laser- und Computertechnik GmbH**
  **D-87459 Pfronten (DE)**

(72) Erfinder:
- **Häusler, Gerd, Prof. Dr.**
  **D-8520 Erlangen (DE)**
- **Herrmann, Jürgen**
  **D-8520 Erlangen (DE)**

(74) Vertreter: **Patentanwälte Beetz - Timpe - Siegfried Schmitt-Fumian - Mayr**
**Steinsdorfstrasse 10**
**80538 München (DE)**

(56) Entgegenhaltungen:
| WO-A-81/03704 | US-A- 3 589 815 |
| US-A- 3 745 566 | US-A- 3 839 639 |
| US-A- 4 564 761 | US-A- 4 708 483 |

EP 0 559 120 B1

**Beschreibung**

Die Erfindung betrifft ein Verfahren und eine Vorrichtung zur Abstandsmessung der im jeweiligen Oberbegriff der Patentansprüche 1 (Verfahren) bzw. 9 (Vorrichtung) angegebenen Gattung.

Zur genauen Messung von Abständen zwischen einem Objekt, z. B. der Oberfläche eines eingespannten Werkstücks, und einem Bezugspunkt sind verschiedene Meßprinzipien bekannt, die sich gliedern lassen in Interferometrie, Laufzeitmethoden, Fokussuche und Triangulation (vgl. T. C. Strand, "Optical three-dimensional sensing for machine vision", Opt. Eng. 24, 33 (1985)). Da Interferometrie für optisch diffus streuende Oberflächen, wie sie im Maschinenbau vorkommen, nicht geeignet ist und Laufzeitmessungen zu ungenau sind, basieren die meisten kommerziell eingesetzten Abstandssensoren auf der Triangulation oder der Fokussuche. Diese beiden Methoden sind physikalisch ähnlich und unterliegen auch den gleichen physikalischen Beschränkungen.

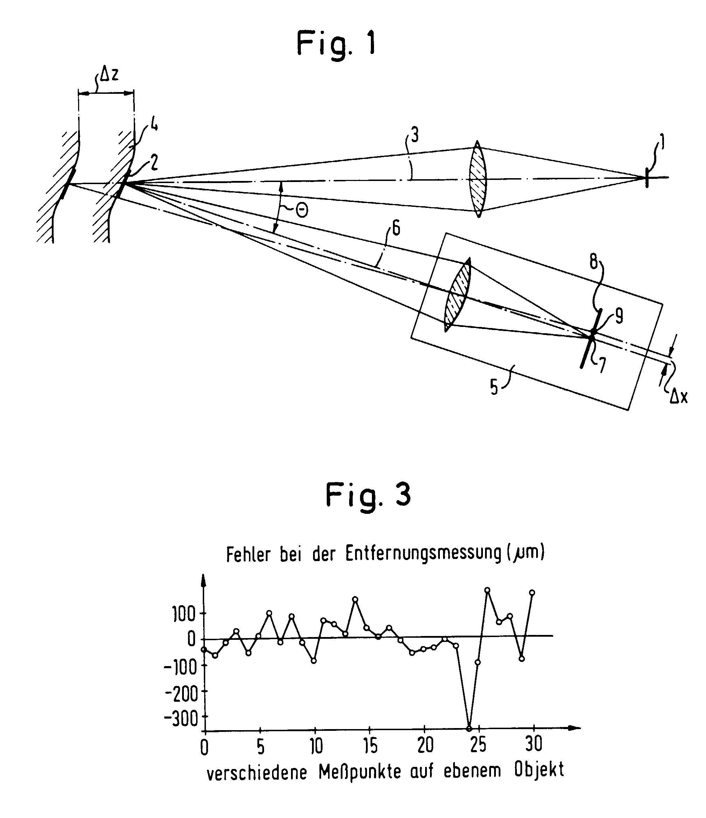

Der am meisten verbreitete Abstandssensor basiert auf dem in Fig. 1 schematisch dargestellten Prinzip. Danach wird ein Leuchtfleck 2 als Bild einer Lichtquelle 1 in Richtung der Beleuchtungsachse 3 auf ein Objekt 4 projiziert. Das an der Objektoberfläche reflektierte kohärente Licht wird in einem Meßkopf 5 in Richtung der Beobachtungsachse 6, die unter einem Triangulationswinkel θ gegen die Beleuchtungsachse geneigt ist, in einem Leuchtfleck-Bild 7 auf einem Photoempfänger 8 gesammelt. Der Meßabstand wird durch Triangulation bestimmt. Dabei bewirkt eine Abstandsänderung der Objektoberfläche mit dem Leuchtfleck 2 um eine Strecke $\Delta z$ eine meßbare laterale Verschiebung $\Delta x$ des Leuchtfleck-Bildes 7 zur Position 9.

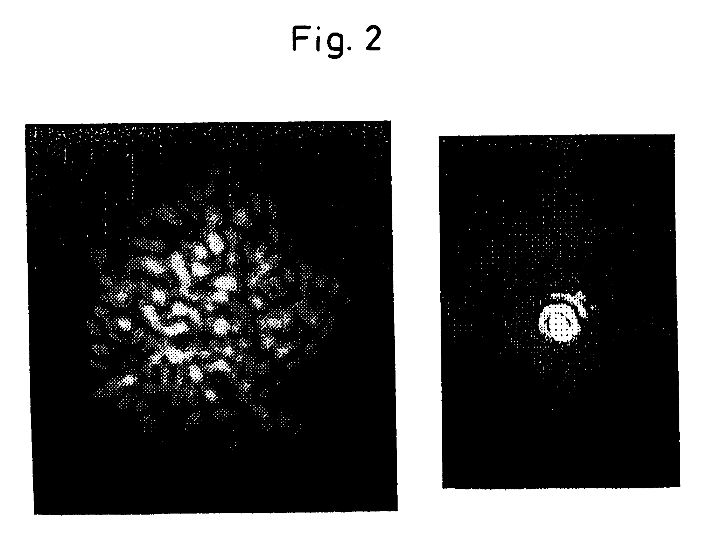

Die Genauigkeit der Abstandsbestimmung wird durch die Genauigkeit der Positionsbestimmung des Leuchtfleck-Bildes 7 bzw. 9 gegeben, die jedoch durch physikalische Grenzen fundamental beschränkt ist. Die Ursache für diese Begrenzung liegt in der statistischen "Speckle-Struktur" des Leuchtfleck-Bildes, wie es in Fig. 2 dargestellt ist. Specklerauschen entsteht im wesentlichen - auch bei Beleuchtung mit sogenannt inkohärenten Quellen -, weil beim elementaren Streuungsakt jedes angeregte Atom Licht emittiert, dessen Phase mit der des anregenden Lichtes korreliert ist, wobei das anregende und das gestreute Licht interferenzfähig oder 'zueinander kohärent' sind. Dies ist auch der Fall bei der Streuung von Sonnenlicht an Gegenständen, ebenso wie bei den bekannten Abstandssensoren. Weil die Kohärenzfunktion bei der Ausbreitung von Licht breiter wird, ist selbst das Licht einer Glühlampe am Ort einer beleuchteten Objektoberfläche nicht vollständig räumlich inkohärent, d. h., eng benachbarte Oberflächenelemente werden phasenkorreliert beleuchtet. Bei kohärenter Streuung ist praktisch immer das remittierte Licht zweier benachbarter Oberflächenpunkte interferenzfähig.

Die in Fig. 2 dargestellte Struktur wird durch die jeweilige Mikrotopografie der Objektoberfläche bestimmt und hat zur Folge, daß das jeweilige Leuchtfleck-Bild nur mit einer statistischen Unsicherheit erfaßt werden kann, was auch die Genauigkeit der Abstandsbestimmung beeinträchtigt. Diese Zusammenhänge und mögliche Auswege sind u. a. in den DE-A-36 14 332, WO 89/11 630 und DE-A-37 031 882 im einzelnen beschrieben.

Ferner ist bekannt (G. Häusler, "About fundamental limits of three-dimensional sensing", 15th Congress of the Int. Com. for Optics, Ed. F. Lanzl, 352 (1990)), daß alle Verfahren, die mit kohärentem Licht arbeiten, an die o. g. physikalische Grenze der Genauigkeit stoßen, die durch die Wechselwirkung von kohärentem Licht mit den im Maschinenbau üblichen rauhen Oberflächen bewirkt wird. Die am Objekt gestreute Welle weist eine räumlich variierende Phasen- und Intensitätsfluktuation auf, die eine Lokalisation des Streuflecks über eine bestimmte Genauigkeitsgrenze hinaus verhindert. Diese Genauigkeitsgrenze ist im wesentlichen durch die Beobachtungsapertur gegeben:

$$\delta x \approx \lambda/\sin u \qquad (1).$$

Dabei bedeuten $\delta x$ die statistische Unsicherheit (Standardabweichung) der lateralen Lokalisation des Leuchtflecks, $\lambda$ die Wellenlänge und sin u die Beobachtungsapertur. Bei Triangulationsmessungen, zwischen denen ein Triangulationswinkel θ zwischen der Achse der Strahlung und der Achse der Beobachtung benutzt wird, führt die laterale Lokalisationsunsicherheit zu einer Meßunsicherheit $\delta z$ bezüglich der Entfernung:

$$\delta z \approx \lambda/(\sin u \cdot \sin \theta) \qquad (2).$$

Bei Verfahren, die auf Fokussuche beruhen, errechnet sich die Meßunsicherheit aufgrund von Speckle nach Gleichung (3):

$$\delta z \approx \lambda/\sin^2 u \qquad (3),$$

was der klassischen Schärfentiefe nach Rayleigh entspricht.

Die Gleichungen (2) und (3) sagen im wesentlichen aus, daß mit kohärenter Strahlung für eine geringe Meßunsicherheit $\delta z$ eine große Beobachtungsapertur sin u notwendig ist und/oder ein großer Triangulationswinkel θ. Für eine geforderte Meßunsicherheit unter 10 μm führt dies zu unpraktikablen Winkeln u und θ. Beispielsweise wird bei einer Wellenlänge von $\lambda = 0.8$ μm für eine Meßgenauigkeit von $\delta z \approx 10$ μm bei Fokussuche eine Apertur von sin u ≈ 0.28 benötigt, also ein Aperturwinkel von fast 30°. Ein solcher Winkel ist für mikroskopische Anwendungen eventuell praktikabel, für makroskopische Dimensionen führt er jedoch zu sehr großen Linsen. Überdies stört die Abschattung der Randstrahlen, d. h. man kann nicht in Löcher hineinsehen.

Es ist noch wesentlich, zwischen Genauigkeit und Auflösung zu unterscheiden: Richtet man einen oben beschriebenen Sensor auf ein Objekt, so wird der Sensor eine Entfernung anzeigen, die im Rahmen der durch die Gleichungen (2), (3) angegebenen Toleranz genau ist. Verfährt man das Objekt um eine kleine Strecke in Richtung auf den Sensor, so wird die entsprechende Entfernungsänderung angezeigt.

Der Sensor zeigt also eine durchaus gute Entfernungsauflösung. Dies gilt jedoch nur für Objektverschiebungen, die klein gegen die Schärfentiefe der Beobachtung sind, da nur dann die Speckle-Struktur erhalten bleibt.

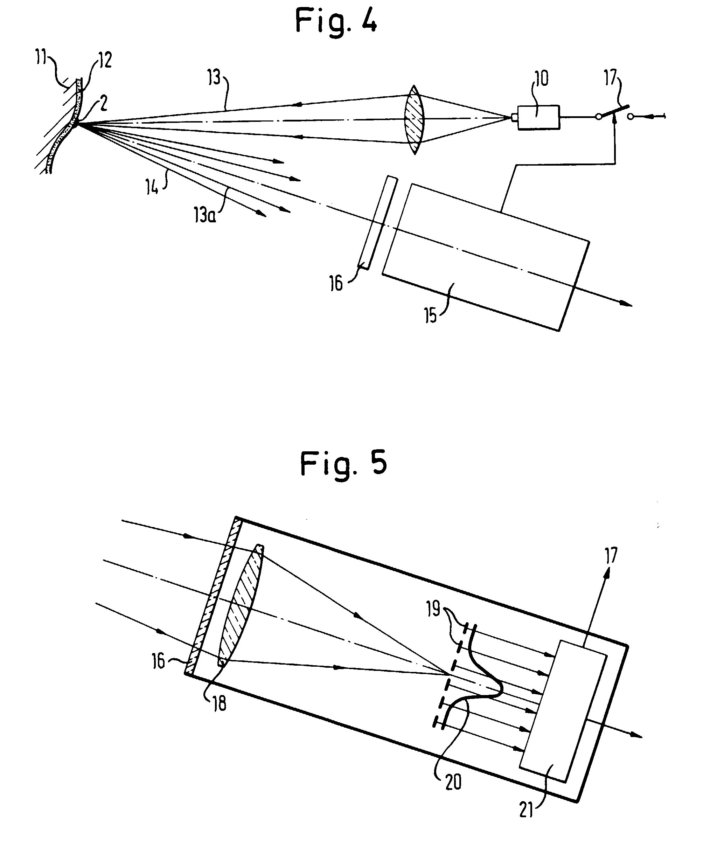

Wenn aber ein Objekt mit einer völlig ebenen (aber rauhen) Objektoberfläche parallel zur Oberflächenebene verschoben wird, sollte der Sensor unabhängig von der Verschiebung die gleiche Entfernung anzeigen. Dies ist jedoch nicht der Fall. Das Sensorsignal täuscht das Vorhandensein einer 'gebirgigen' Oberfläche vor, wie in Fig. 3 wiedergegeben, mit einer Standardabweichung der Höhe, die durch Gleichung (2) bzw. (3) gegeben ist. Diese Standardabweichung $\delta z$ ist nicht die Rauhtiefe der Objektoberfläche, wie gelegentlich behauptet wird. $\delta z$ hat überhaupt nichts mit der Mikrotopografie der Oberfläche zu tun, sondern wird ausschließlich durch eine Apparateeigenschaft, die Beobachtungsapertur, bestimmt, und kann ein Vielfaches der Objekt-Rauhtiefe betragen.

Um die Speckle-Struktur und damit statistische Meßfehler zu vermeiden, sollte die zur Messung verwendete Strahlung, die die Entfernung codiert, weitgehend räumlich inkohärent sein. Dies läßt sich aber nicht erreichen, indem man eine (kleine) inkohärente Punktquelle, z. B. einen Quecksilber-Höchstdruckbogen auf das Objekt abbildet. Denn nach der Kohärenztheorie ist nach der Abbildung die Breite der räumlichen Kohärenzfunktion auf dem Objekt gleich der Breite des Beugungsbildes (Punktbildes) der beleuchtenden Optik (M. Born, E. Wolf, "Prinziples of optics", Pergamonn Press, New York, 1970). Damit ist das Bild einer auch inkohärenten sehr kleinen Quelle immer räumlich kohärent.

Weitgehende räumliche Inkohärenz im Leuchtfleck 2 ließe sich also nur erreichen, wenn die auf das Objekt abgebildete Strahlungsquelle 1 großflächig ist, so daß auch der Leuchtfleck groß gegenüber dem Punktbild der Projektionsoptik ist. Ein solches Vorgehen hat aber den Nachteil, daß man auf dem Objekt keinen kleinen Punkt mehr durch Beleuchtung adressiert, sondern einen großen Bereich, so daß die laterale Auflösung reduziert wird. Außerdem ist die Lokalisation eines großflächigen Leuchtfleck-Bildes auf dem Photoempfänger nur mit geringerer Genauigkeit möglich. Es wurde auch versucht (vgl. DE-A-36 14 332 und W. Dremel, G. Häusler, M. Maul, "Triangulation with large dynamical range", Optical Techniques for Industrial Inspection, Ed. G. Paolo, Proc. SPIE 665, 182 (1986)), das Objekt mit einem Laser zu beleuchten und den Laser-Leuchtfleck während der Messung über das Objekt zu bewegen. Dies ist äquivalent zur Beleuchtung mit einer großen inkohärenten Lichtquelle und führt zu den gleichen Problemen. Eine andere Möglichkeit ist, durch Erzeugung von Turbulenz in der Pupille der abbildenden Optik den Laser-Leuchtfleck auf dem Objekt statistisch tanzen zu lassen. Auch dies ist äquivalent zu den obigen Methoden und führte nicht zu den verlangten Meßgenauigkeiten im μm-Bereich. Mit anderen Worten, es läßt sich keine genügend räumlich inkohärente Beleuchtung ohne den oben erwähnten Nachteil eines großen Leuchtflecks erzielen. Eine zeitlich inkohärente Beleuchtung wird zur Speckle-Reduktion erst bei sehr großen Rauhtiefen des Objektes wirksam, wie sie praktisch im Maschinenbau nicht vorkommen.

Die vorstehend beschriebene Beeinträchtigung einer hochgenauen Abstandsbestimmung durch die "Speckle-Struktur" der erhaltenen Leuchtfleckbilder besteht auch bei einer aus der DE-A-33 42 675 bekannten Meßvorrichtung zur optischen Abtastung von Werkstükken nach dem Triangulationsprinzip. Von einem oder auch zwei Projektoren wird ein Lichtfleck unter einem Winkel auf die Oberfläche des Meßobjekts projiziert und mit einem lichtempfindlichen Detektor wird die bei Änderung des Abstands zum Objekt auftretende Verschiebung des Lichtfleck-Bildes bestimmt. Zur Erhöhung der Genauigkeit der Abstandsbestimmung wird zusätzlich zur lateralen Verschiebung des Bildes auch noch die Form und der Flächeninhalt des Lichtflecks mittels Bildanalyse gemessen. Da jedoch die kohärente Strahlung des angestrahlten Lichtflecks ausgewertet wird, ergeben sich auch hier die durch die Speckle-Struktur des Lichtfleck-Bildes erursachten Meßungenauigkeiten.

Entsprechendes gilt auch für die aus den DE-A-40 06 300 und US-A-4 453 083 bekannten Abstands-Meßvorrichtungen.

Aufgabe der Erfindung ist es, ein Verfahren und eine Vorrichtung zur Abstandsbestimmung aufzuzeigen, bei denen die Beschränkungen des Standes der Technik eliminiert sind und mit denen mit technisch einfachen Mitteln hochgenaue Meßergebnisse erhalten werden können.

Diese Aufgabe wird durch die in den Patentansprüchen 1 bzw. 9 angegebenen Merkmale gelöst.

Gemäß der Erfindung wird das Objekt selbst durch die elektromagnetische Strahlung in einem lokal begrenzten Bereich zur Emission von Strahlung angeregt, die nicht kohärent zur anregenden Strahlung ist. Dabei ist auch die Strahlung nahe beieinanderliegender Atome auf der Objektoberfläche nicht korreliert, d. h. der angeregte Leuchtfleck strahlt räumlich und im allgemeinen auch zeitlich inkohärent. Da ferner erfindungsgemäß nur diese vom Leuchtfleck emittierte inkohärente Strahlung zur Abstandsbestimmung ausgewertet wird, tritt keine Speckle-Struktur im Leuchtfleck-Bild auf, was eine genauere Positionsbestimmung des Leuchtfleck-Bildes und damit auch eine wesentlich genauere Abstandsbestimmung ermöglicht.

Eine zweckmäßige Ausgestaltung zeichnet sich dadurch aus, daß das Objekt im Leuchtfleck von der Strahlungsquelle, z. B. einem Laser, lokal so stark aufgeheizt wird, daß es thermische (Planck'sche) Strahlung emittiert. Diese ist räumlich und auch zeitlich inkohärent. Eine weitere Möglichkeit ist die Anregung von Lumineszenz, die sich aus Fluoreszenz und Phosphoreszenz zusammensetzt. Ebenfalls in Frage kommen Raman-Streuung sowie Brillouin-Streuung oder andere inkohärente Streumechanismen.

Mit einem auf dem Objekt erzeugten Leuchtfleck, der diese Art von Strahlung emittiert, gibt es keine statistische Meßunsicherheit mehr durch Speckle, so daß die durch die Gleichungen (2) und (3) gegebene Grenze der Meßunsicherheit um Größenordnungen unterschritten wird.

In den abhängigen Ansprüchen sind vorteilhafte Weiterbildungen und Varianten der Erfindung angegeben.

Weitere Besonderheiten und Vorzüge der Erfindung lassen sich der folgenden Beschreibung von Ausführungsbeispielen anhand der Zeichnung entnehmen. Es zeigen:

Fig. 1  das - bekannte - Prinzip der Abstandsmessung durch aktive Triangulation;

Fig. 2  ein durch Speckle-Struktur gestörtes Leuchtfleckbild für zwei verschiedene Beobachtungsaperturen, das bei dem Meßverfahren nach Fig. 1 erhalten wird;

Fig. 3  ein Diagramm der durch Speckle vorgetäuschten Unebenheit einer ebenen Fläche;

Fig. 4  das Prinzip der Abstandsmessung gemäß der Erfindung;

Fig. 5  einen Triangulationsmeßkopf in schematischer Darstellung;

Fig. 6  durch Veränderung der Form des Leuchtfleckbildes entstehende Meßfehler in Form von Diagrammen;

Fig. 7  unabhängig von der Form des Leuchtflecks eine Möglichkeit zur Kompensation der auf Formänderungen des Leuchtfleckbildes zurückgehenden Meßfehler;

Fig. 8  eine Meßanordnung für eine von der Leuchtfleckform unabhängige Abstandsmessung;

Fig. 9  eine Meßanordnung mit Doppelschlitzblende und einer Zylinderlinse für die inkohärente Meßstrahlung;

Fig. 10  eine Meßanordnung mit virtueller Leuchtfleckverdopplung durch eine Savartplatte.

Wie in Fig. 4 gezeigt, wird durch eine geeignete kleine Lichtquelle 10 in bzw. auf dem Objekt 11 ein Leuchtfleck 2 erzeugt. Die Lichtquelle 10 kann eine thermische Quelle sein, wie eine Glühlampe, eine Gasentladungslampe, eine Leuchtdiode, ein Gas- oder Halbleiterlaser sowie eine Superlumineszenzdiode. Wesentlich ist dabei, daß die Strahlung 13 der Lichtquelle 10 geeignet ist, die Oberfläche des Objektes im Leuchtfleck 2 zu inkohärenter Strahlung 14 anzuregen. Viele organische Materialien zeigen z. B. Lumineszenz (Fluoreszenz und Phosphoreszenz) oder Raman-Streuung oder Brillouin-Streuung, wenn sie mit der richtigen Wellenlänge angeregt werden. Falls das Objekt keine inkohärente Strahlung emittiert, kann man die Oberfläche durch geeignete Behandlung aktivieren, z. B. durch Beschichten mit geeigneten Phosphoren 12. Oft genügen geringe organische Oberflächenverunreinigungen, um die Oberfläche zu inkohärenter Emission anzuregen.

Wenn das erfindungsgemäße Meßverfahren bei der abtragenden Bearbeitung eines Werkstücks mittels Laserstrahls eingesetzt wird, emittiert der vom Laserstrahl im bzw. auf dem Objekt erzeugte heiße Brennfleck die zur Abstandsbestimmung benötigte inkohärente Strahlung. Auch bei anderen Verfahren der Materialbearbeitung, wie dem Lichtbogenschweißen, tritt eine zur Emission von inkohärenter Strahlung ausreichend hohe lokale Aufheizung der Objektoberfläche auf.

Die vom Objekt 11 emittierte räumlich inkohärente Strahlung 14 wird in einem Meßkopf 15 aufgefangen und ausgewertet, um den Abstand zum Objekt zu bestimmen. Dabei wird der vom Objekt 11 ebenfalls emittierte kohärente Anteil 13a der Strahlung 13 vom emittierten inkohärenten Strahlungsanteil 14 vor der Auswertung getrennt. Diese Trennung ist durch ein optisches Farbfilter 16 möglich, weil die inkohärente Strahlung meist in einem anderen Wellenlängenbereich als die kohärente Strahlung liegt. Eine andere Möglichkeit besteht darin, die spektrale Empfindlichkeit des Photoempfängers so zu wählen, daß der kohärente Strahlungsanteil 13a nicht erfaßt wird. Eine weitere Möglichkeit besteht darin, die anregende Strahlung 13 nach einer gewissen Zeit zu unterbrechen und die Auswertung der inkohärenten Strahlung 14 erst danach vorzunehmen. Diese Möglichkeit ist in Fig. 4 symbolisch durch einen vom Meßkopf 15 gesteuerten Schalter 17 vor der Lichtquelle 10 dargestellt. Da die inkohärente angeregte Strahlung auch verzögert ausgesendet werden kann, je nach Wahl des angeregten Materials, kann die inkohärente Strahlung innerhalb eines Zeitfensters, dessen Beginn und Ende vorteilhaft einstellbar sind, ausgewertet werden.

Es sind verschiedene Ausführungen des Meßkopfes 15 möglich, weil die Entfernungsinformation, die im emittierten Licht steckt, auf verschiedene Weise decodiert werden kann. In den Fig. 4 und 5 ist ein Triangulations-Meßkopf als Beispiel dargestellt, der eine Abbildungslinse 18 und einen örtlich auflösenden Photoempfänger, vorzugsweise eine 'positionsempfindliche Photodiode' (PSD) oder ein in Fig. 5 dargestelltes CCD-Photodiodenarray 19, enthält. In Fig. 5 sind die einzelnen Dioden eines solchen Arrays 19 angegeben. Der Ort des Leuchtfleck-Bildes, dessen Intensitätsverteilung bei Pos 20 beispielhaft wiedergegeben ist, codiert den Abstand zum Objekt 11. Erfindungsgemäß kann der Ort des Leuchtfleck-Bildes nun mit extremer Genauigkeit bestimmt werden, weil die Form des Leuchtfleck-Bildes nicht durch Speckle statistisch gestört ist.

Deshalb kann man die Position des Leuchtfleck-Bildes auch wesentlich genauer bestimmen als seinen Durchmesser oder auch wesentlich genauer als durch den Abstand der CCD-Photodioden gegeben. Man kann in der Auswerteeinheit 21 z. B. den Schwerpunkt des Leuchtfleck-Bildes bestimmen oder den Ort der maximalen Intensität, d. h. den Scheitelpunkt der Verteilungskurve 21, wobei sich diese Größen durch Subpixel-Interpolation oft genauer als auf 1 μm in der Ebene des Photoempfängers bestimmen lassen. Die Auswertung kann in diesem Fall so erfolgen, daß die drei oder fünf höchsten Photodiodensignale benutzt werden, um eine Gausskurve oder andere passende Kurve in die Meßwerte hineinzufitten. Die Lage des Maximums der gefitteten Kurve ist ein Maß für die Position des Leuchtfleck-Bildes. Die mögliche Genauigkeit wird jetzt nur noch im wesentlichen durch das Rauschen des Photoempfängers beeinflußt.

Es sind viele weitere Varianten und Ausgestaltungen des Meßkopfes denkbar, von denen noch zwei Ausführungen gezeigt werden, die weitere besondere Vorteile bieten.

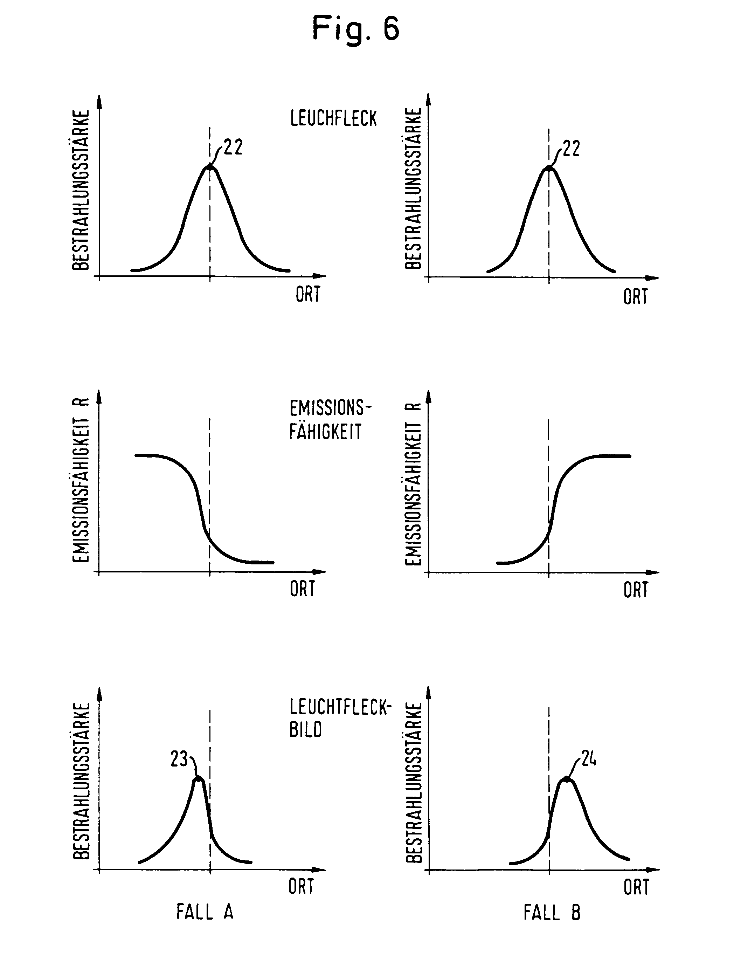

Verfahren, die die Position eines Leuchtfleck-Bildes auswerten, sind darauf angewiesen, daß die Form dieses Leuchtfleck-Bildes unabhängig vom adressierten Ort auf dem Objekt ist und unabhängig von der Entfernung. Dies wird deutlich durch Fig. 6: Wenn das Objekt z. B. eine örtliche Änderung der Reflexion oder Emissionsfähigkeit R(x) aufweist, so sieht das Leuchtfleck-Bild für den Ort A anders aus, als für den Ort B. Eine Bestimmung des Schwerpunktes würde zu geringfügigen Meßfehlern führen.

Eine solche lokale Variation der Form des Leuchtfleck-Bildes, je nach dem adressierten Ort auf der Objektoberfläche, kann man aber nicht ausschließen. Es kann nicht nur lokale Variation der Reflexion oder Emissionsfähigkeit vorliegen, es kann z. B. auch der Leuchtfleck selbst durch Turbulenz zeitlich und örtlich variieren. Zwar wird der Effekt i. a. klein sein, wenn der Leuchtfleck klein ist, aber wegen der unterdrückten Speckle und der damit erreichbaren hohen Genauigkeit soll auch ein Einfluß der Form des Leuchtflecks auf das Meßergebnis ausgeschlossen werden. Da bei den bekannten Verfahren das Speckle die Hauptfehlerquelle ist, war es bisher nicht notwendig, diesem Effekt Beachtung zu schenken.

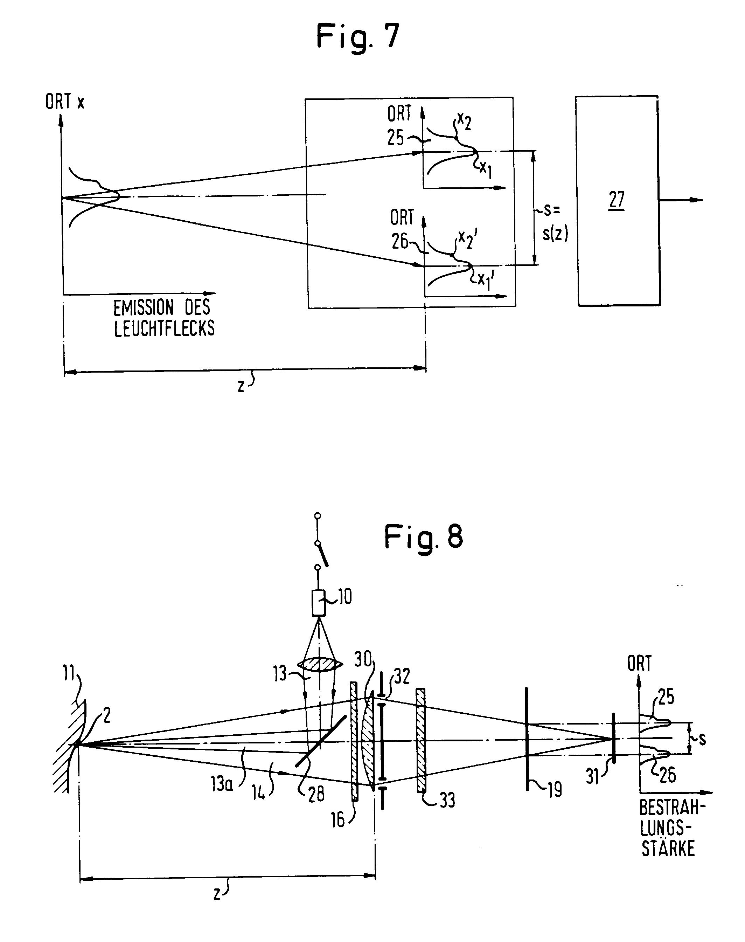

Die Unabhängigkeit der Abstandsmessung von eventuellen Formvariationen des Leuchtfleck-Bildes wird erfindungsgemäß durch folgendes Verfahren gelöst, wie z. B. in Fig. 7 dargestellt. Um den Einfluß der Form des Leuchtfleck-Bildes zu beseitigen, wird gemäß Fig. 7 nicht der Ort des Leuchtfleck-Bildes selbst bestimmt, sondern es werden mindestens zwei formgleiche Leuchtfleck-Bilder 25 und 26 erzeugt und die Entfernung s zwischen diesen beiden formgleichen Leuchtfleck-Bildern 25, 26 wird gemessen. Damit ist es möglich, in diesen Bildern jeweils die Entfernung s zwischen charakteristischen homologen Punkten $x_1$, $x_1'$ bzw. $x_2$, $x_2'$, etc. zu finden, wie in Fig. 7 angegeben. Aus der genauen Lage der homologen Punkte, wie in einer Auswerteeinheit 27 bestimmt werden kann, läßt sich der Abstand s und damit die Objektentfernung auswerten.

Die homologen Punkte können z. B. lokale Maxima oder Minima sein. Man kann aber auch den Schwerpunkt des Leuchtfleck-Bildes bestimmen und die Entfernung der Schwerpunkte der verschiedenen Leuchtfleck-Bilder bestimmen, um daraus den Objektabstand zu ermitteln. Ebenso läßt sich eine Korrelation der Leuchtfleck-Bilder 25, 26 durchführen und daraus auf bekannte Weise der Abstand s errechnen.

Diese Überlegungen gelten jedoch nicht für Formänderungen des Leuchtfleck-Bildes, die durch Kohärenzeffekte entstehen.

Die Grundüberlegung, Unabhängigkeit der Abstandsmessung von der Leuchtfleckform zu gewinnen, indem nicht mehr eine Position, sondern die Differenz von mehreren Positionen bestimmt wird, kann auf verschiedene Weise realisiert werden. Zwei Ausführungen einer solchen Meßvorrichtung sind in den Fig. 8 bis 10 dargestellt.

Bei der Ausführung nach Fig. 8 wird die in der Lichtquelle 2 erzeugte Strahlung 13 an einem Teilerspiegel 28 zum Objekt 11 hin reflektiert. Die im Leuchtfleck 2 reemittierte inkohärente Strahlung 14 durchläuft das Farbfilter 16 und eine Sammellinse 30. Hinter dieser Sammellinse 30 ist eine mehrere beabstandete Öffnungen aufweisende Blende 32 angeordnet, die bei der Ausführung nach Fig. 8 als Doppelspaltblende ausgebildet ist. Es sind auch Blenden mit mehreren andersartigen Öffnungen möglich. Der Photodetektor 19 ist hier im Unterschied zur Vorrichtung nach Fig. 5 außerhalb der Brennpunktebene 31 der Sammellinse 18 positioniert. Dadurch entstehen zwei unscharfe, nebeneinanderliegende Leuchtfleck-Bilder 25 und 26 in einem Abstand s. Anders ausgedrückt, erhält man eine unscharfe Projektion der Blende. Der Abstand s der unscharfen Leuchtfleck-Bilder hängt von der Entfernung z des Leuchtflecks 2 von der Linse 30 ab. Die Abstandsänderung Δs der unscharfen Leuchtfleck-Bilder 25, 26 kann wie folgt berechnet werden.

Es gelten folgende Symbole:

s    Abstand der unscharfen Spotbilder;

Δs   Abstandsänderung der Leuchtfleck-Bilder;

z    Entfernung des Leuchtflecks 2 von der Linse 30 (Gegenstandsweite);

b    Entfernung des Bildes von der Linse (Bildweite);

D    Abstand der Spaltblenden in der Pupille;

A      Abstand der Detektorebene zur Linse;

a      Defokussierung (intrafokal), Abstand Detektorebene;

$\beta$      Abbildungsmaßstab, $\beta = b/z$;

f      Brennweite der Linse.

Damit läßt sich folgende Gleichung ansetzen

$$D/b = s/a \qquad (4);$$

durch Einsetzen von $a = b-A$ und $b = -z \cdot \beta$ erhält man:

$$s = D + (A \cdot D)/(z \cdot \beta) \qquad (5).$$

Diese Gleichung wird nach z differenziert:

$$\frac{\delta s}{\delta z} = - \frac{A \cdot D}{z^2 \cdot \beta} => \Delta s = - \frac{A \cdot D}{z^2 \cdot \beta} \Delta z \qquad (6).$$

Weiterhin gilt folgende Abbildungsgleichung

$$1/f = 1/b - 1/z \qquad (7).$$

Für b wird $-z \cdot \beta$ eingesetzt und dann nach z aufgelöst; es ergibt sich:

$$z = -f - f/\beta \qquad (8).$$

Einsetzen in Gleichung (3) liefert nach einigen Umformungen:

$$\Delta s = - \frac{A \cdot D}{f^2 (\beta + 2 + \beta^{-1})} \Delta z \qquad (9).$$

Diese relative Abstandsänderung, die ein Maß für die Empfindlichkeit des Verfahrens ist, hat ihr Optimum bei einem Abbildungsmaßstab von $\beta = -1$. Dies kann aus Gleichung (6) gezeigt werden. Die Abstandsänderung $\Delta s$ wird umso größer, je kleiner der Nenner ist. Es ist also zu untersuchen, wann $\gamma(\beta) = \beta + 2 + \beta^{-1}$ minimal wird. Dies gilt für $\beta_0$ mit $\gamma'(\beta_0) = 0$. Die erste Ableitung von $\gamma(\beta)$ ist

$$\gamma'(\beta) = 1 - \beta^{-2} \qquad (10).$$

Die Nullstellen liegen bei $\beta_0 = \pm 1$. $\beta = -1$ ist physikalisch relevant. Da $\gamma'(-1)$ größer als 0 ist, wird für $\beta = -1$ tatsächlich $\gamma$ minimal, d. h. $\Delta s$ wird maximal. Dies wird erfindungsgemäß ausgenutzt.

Eine weitere äußerst wichtige Eigenschaft der Anordnung ist, daß die unscharfen Leuchtfleck-Bilder 25, 26 nicht spiegelsymmetrisch zur optischen Achse sind, sondern jeweils die gleiche Orientierung haben, wie in Fig. 8 gezeigt, so daß der Abstand homologer Punkte unabhängig von der Form wird.

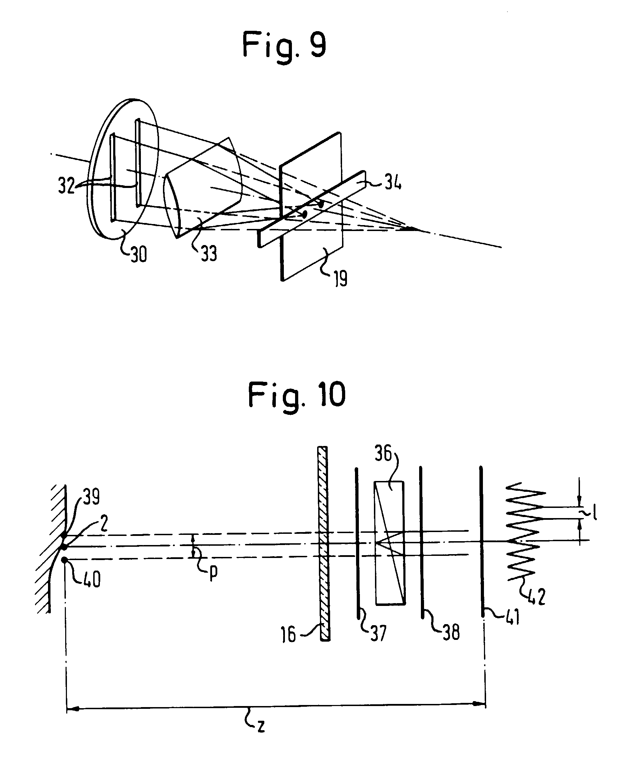

Da die unscharfen Leuchtfleck-Bilder 25, 26 auch als unscharfe Projektion der Pupille erscheinen, sind sie im obigen Beispiel spaltförmig. Dies ist von gewissem Nachteil, da der Photodetektor dann eine so große Fläche einnehmen sollte, daß das gesamte Licht aufgefangen wird. Kostengünstiger und besser für schnellere Auswertung ist die Verwendung einer Photodiodenzeile, die in Verbindung mit einer in Fig. 8 dargestellten Zylinder-Sammellinse 33 eingesetzt wird. Diese Zylinder-Sammellinse 33 ist so orientiert, daß die unscharfen Spaltprojektionen annähernd zu je einem Punkt zusammengezogen werden, wie in Fig. 9 dargestellt. Damit ist die Verwendung eines zeilenförmigen Photoempfängers, anstelle eines flächenhaften Photoempfängers ohne Verluste möglich.

Eine weitere Ausgestaltung zum Erzeugen von zwei oder mehr formgleichen Leuchtfleck-Bildern, deren gegenseitiger Abstand vom Objektabstand abhängt, entsteht durch die Verwendung eines doppelbrechenden Elementes, durch das das Licht des Leuchtflecks hindurchtritt. Bei einer solchen in Fig. 10 dargestellten Meßvorrichtung tritt die im Leuchtfleck 2 erzeugte inkohärente Strahlung beispielsweise durch eine Savart-Platte 36, mit einem vorgeschalteten Polarisator 37 und einem nachgeschalteten Polarisator 38. Diese Anordnung erzeugt zwei virtuelle Doppelbilder des Leuchtflecks an den Stellen 39 und 40, im Abstand p, der durch die Savart-Platte 36 gegeben ist. Das Licht dieser Doppelbilder kommt in einer Ebene 41 hinter der Savart-Platte zur Interferenz. Es sind dort Interferenzstreifen 42 zu beobachten. Der Abstand $\ell$ der Interferenzstreifen hängt nach der Beziehung $\ell = z \lambda/p$ von der Entfernung z der Meßebene 26 vom Leuchtfleck 20 ab. Der Abstand $\ell$ der Interferenzstreifen wird bestimmt und daraus die Objektentfernung hergeleitet. Durch die erfindungsgemäße Verwendung der räumlich inkohärenten Strahlung wird eine Verbesserung der Genauigkeit um Größenordnungen erzielt. Ebenso wie bei der Ausführung nach Fig. 8 ergibt sich der zusätzliche Vorteil einer hohen Symmetrie, d. h. Beobachtung und Beleuchtung aus der gleichen Richtung, und damit geringen Fehleranfälligkeit sowie einer geringen Abschattung.

Dadurch kann eine geringe Beobachtungsapertur gewählt werden. Es tritt keine Asymmetrie, wie bei der gewöhnlichen Triangulation mehr auf, die Beleuchtungsrichtung ist gleich der Beobachtungsrichtung. Es gibt nur sehr geringe Abschattung.

**Patentansprüche**

1. Verfahren zur Abstandsmessung zwischen einem Objekt (11) und einem Bezugspunkt, bei welchem

   - das Objekt mit elektromagnetischer Strahlung aus einer Strahlungsquelle (10) in einem Leuchtfleck (2) bestrahlt wird und

   - vom Leuchtfleck (2) ausgehende Strahlung von einem Meßkopf (15) aufgefangen und daraus der Abstand zwischen Objekt (11) und dem Bezugspunkt bestimmt wird,

   **dadurch gekennzeichnet**,

   - daß das Objekt (11) im Leuchtfleck (2) durch die elektromagnetische Strahlung zur Emission von räumlich inkohärenter Strahlung angeregt wird und

- daß zur Abstandsbestimmung selektiv nur der räumlich inkohärente Anteil der im Leuchtfleck (2) angeregten und emittierten Strahlung benutzt wird.

2. Verfahren nach Anspruch 1,

dadurch gekennzeichnet,
daß das Objektmaterial im Leuchtfleck (2) durch die elektromagnetische Strahlung erhitzt und zur Emission von räumlich inkohärenter thermischer Strahlung angeregt wird.

3. Verfahren nach Anspruch 1,

dadurch gekennzeichnet,
daß die Objektoberfläche im Leuchtfleck (2) durch die elektromagnetische Strahlung zur Emission von nicht thermischer räumlich inkohärenter Strahlung, wie Lumineszenz, Fluoreszenz, Phosphoreszenz, Ramanstreuung oder Brillouinstreuung, angeregt wird.

4. Verfahren nach einem der Ansprüche 1 bis 3,

dadurch gekennzeichnet,
daß die vom Leuchtfleck (2) kommende kohärente Strahlung von der räumlich inkohärenten Strahlung abgetrennt oder unterdrückt wird.

5. Verfahren nach einem der Ansprüche 1 bis 3,

dadurch gekennzeichnet,
daß bei impulsförmigem Betrieb der Strahlungsquelle (10) die im Leuchtfleck (2) reemittierte Strahlung nur in den Impulspausen erfaßt wird.

6. Verfahren nach einem der Ansprüche 1 bis 5,

dadurch gekennzeichnet,
daß zur Abstandsbestimmung unabhängig von der Form und Position des Leuchtfleckes (2) mindestens zwei nebeneinander liegende Leuchtfleck-Bilder (25, 26) erzeugt werden und daß der Abstand zwischen dem Objekt (11) und dem Bezugspunkt aus dem Zwischenabstand von homologen Punkten in den beiden formdeckungsgleichen Leuchtfleckbildern (25, 26) ermittelt wird.

7. Verfahren nach Anspruch 6,

dadurch gekennzeichnet,
daß der Abstand der Schwerpunkte der beiden formdeckungsgleichen Leuchtfleck-Bilder (25, 26) zur Bestimmung des Objektabstandes ausgewertet wird.

8. Verfahren nach Anspruch 6,

dadurch gekennzeichnet,
daß durch Interpolation die Maxima der beiden Leuchtfleck-Bilder (25, 26) bestimmt werden und aus dem Abstand dieser beiden Maxima der Objektabstand bestimmt wird.

9. Vorrichtung zur Abstandsmessung zwischen einem Objekt und einem Bezugspunkt, bestehend aus

- einer elektromagnetischen Strahlungsquelle (10) mit Fokussierelementen zur Erzeugung eines lokalen Leuchtflecks (2) auf der Oberfläche des Objektes (11),

- einem Meßkopf (15), der die vom Leuchtfleck ausgehende Strahlung erfaßt, und

- Rechenelementen, die aus der vom Meßkopf erfaßten Strahlung den Abstand zwischen dem Objekt und dem Bezugspunkt berechnen,

**dadurch gekennzeichnet**,

daß die Strahlungsquelle (10) in Anpassung an das Objektmaterial so ausgebildet ist, daß vom Leuchtfleck (2) räumlich inkohärente Strahlung emittiert wird, und

daß der Meßkopf (15) Selektionselemente (16, 17, 19) enthält, die nur die vom Leuchtfleck (2) emittierte räumlich inkohärente Strahlung (14) zur Abstandsberechnung auswerten.

10. Vorrichtung nach Anspruch 9,

dadurch gekennzeichnet,
daß der Meßkopf (15) als Selektionselement einen optischen Farbfilter (16) enthält, der den vom Leuchtfleck (2) kommenden kohärenten Strahlungsanteil (13a) absorbiert.

11. Vorrichtung nach Anspruch 9,

dadurch gekennzeichnet,
daß der Meßkopf (15) als Selektionselement einen nur auf den Wellenbereich der inkohärenten emittierten Strahlung ansprechenden Photoempfänger (19) aufweist.

12. Vorrichtung nach Anspruch 9,

dadurch gekennzeichnet,

daß der Meßkopf (15) mit der Strahlungsquelle (1) über einen Taktgeber (17) gekoppelt ist, der die Auswerteeinheit nur bei ausgeschalteter Strahlungsquelle (1) aktiviert.

13. Vorrichtung nach einem der Ansprüche 9 bis 12,

dadurch gekennzeichnet,
daß der Meßkopf (15) optische Elemente und Rechenelemente enthält, die den Objektabstand unabhängig von der Form, Größe und Positionsschwankungen des Leuchtflecks (2) ermitteln.

14. Vorrichtung nach einem der Ansprüche 9 bis 13,

dadurch gekennzeichnet,
daß der Meßkopf (15) optische Elemente (32, 19) zur Erzeugung von mindestens zwei im wesentlichen formgleichen Leuchtfleck-Bildern (25, 26) sowie Auswerteelemente enthält, die je einen Punkt in einem dieser Leuchtfleck-Bilder bestimmen, den Zwischenabstand zwischen entsprechenden homologen Punkten ermitteln und einer Auswerteeinrichtung zuführen, die daraus den Objektabstand errechnet.

15. Vorrichtung nach einem der Ansprüche 9 bis 14,

dadurch gekennzeichnet,
daß die Strahlungsquelle (10) in einem Winkel zur Objektoberfläche angeordnet ist, daß in dem Strahlengang (13) zwischen der Strahlungsquelle (10) und dem Objekt (11) ein Teilungsspiegel (28) angeordnet ist und daß im Strahlengang (14) der vom Leuchtfleck (2) emittierten räumlich inkohärenten Strahlung hinter dem Teilungsspiegel (28) eine Doppelspaltblende (32) angeordnet ist.

16. Vorrichtung nach Anspruch 14 oder 15,

dadurch gekennzeichnet,
daß zwischen dem die beiden Leuchtfleck-Bilder (25, 26) erzeugenden optischen Element (32) eine zylindrische Sammellinse (33) angeordnet ist.

17. Vorrichtung nach einem der Ansprüche 9 bis 13,

dadurch gekennzeichnet,
daß zur Erzeugung von mehreren Leuchtfleck-Bildern ein doppelbrechendes optisches Element im Strahlengang der vom Leuchtfleck (2) emittierten räumlich inkohärenten Strahlung (14) angeordnet ist.

**Claims**

1. A method of measuring the distance between an object (11) and a reference point, wherein

   - the object is illuminated with electromagnetic radiation from a radiation source (10) on to a luminous spot (2) and

   - radiation from the luminous spot (2) is collected by a measuring head (15) and used to determine the distance between the object (11) and the reference point,

   characterised in that

   - the luminous spot (2) on the object (11) is excited by the electromagnetic radiation so as to emit spatially incoherent radiation and

   - the distance is determined by selective use of only the spatially incoherent portion of the radiation excited and emitted at the illuminated spot (2).

2. A method according to claim 1, characterised in that the object material at the illuminated spot (2) is heated by the electromagnetic radiation and excited so as to emit spatially incoherent thermal radiation.

3. A method according to claim 1, characterised in that the surface of the object at the illuminated spot (2) is excited by the electromagnetic radiation so as to emit non-thermal spatially incoherent radiation such as luminescence, fluorescence, phosphorescence, Raman scattering or Brillouin scattering.

4. A method according to any of claims 1 to 3, characterised in that the coherent radiation from the illuminated spot (2) is separated from the spatially incoherent radiation or suppressed.

5. A method according to any of claims 1 to 3, characterised in that in the event of pulsed operation of the radiation source (10), the radiation re-emitted at the illuminated spot (12) is detected only in the intervals between pulses.

6. A method according to any of claims 1 to 5, characterised in that for the purpose of determining the distance, irrespective of the shape and position of the illuminated spot (2), at least two adjacent illuminated-spot images (25, 26) are generated and in that the distance between the object (11) and the reference point is determined from the distance between homologous points on the two congruent luminous-spot images (25, 26).

7. A method according to claim 6, characterised in that the distance between the centres of gravity of the two congruent luminous-spot images (25, 26) is evaluated in order to determine the distance of the object.

8. A method according to claim 6, characterised in that the maxima of the two luminous-spot images (25, 26) are determined by interpolation and the distance of the object is determined from the distance between the two maxima.

9. A device for measuring the distance between an object and a reference point comprising

   - an electromagnetic radiation source (10) with focusing elements for generating a local luminous spot (2) on the surface of the object (11),

   - a measuring head (15) which detects the radiation from the luminous spot, and

   - calculating elements which use the radiation detected by the measuring head to calculate the distance between the object and the reference point,

   characterised in that

   the radiation source (10), adapted to the object material, is designed so that spatially incoherent radiation is emitted by the illuminated spot (2) and

   in that the measuring head (15) contains selection elements (16, 17, 19) which calculate the distance by evaluating only the spatially incoherent radiation (14) emitted by the luminous spot (2).

10. A device according to claim 9, characterised in that the measuring head (15) contains a selection element in the form of an optical colour filter (16) which absorbs the coherent radiation component (13a) coming from the illuminated spot (2).

11. A device according to claim 9, characterised in that the measuring head (15) has a selection element in the form of a photo-receiver (19) which responds only to the wavelength range of incoherent emitted radiation.

12. A device according to claim 9, characterised in that the measuring head (15) is coupled to the radiation source (1) via a clock generator (17) which actuates the evaluating unit only when the radiation source (1) is switched off.

13. A device according to any of claims 9 to 12, characterised in that the measuring head (15) contains optical elements and calculating elements which determine the distance of the object independently of the shape, size and fluctuating position of the luminous spot (2).

14. A device according to any of claims 9 to 13, characterised in that the measuring head (15) contains optical elements (32, 19) for generating at least two substantially congruent luminous-spot images (25, 26) and evaluating elements which each determine a point in one of the luminous-spot images, determine the distance between corresponding homologous points and supply it to an evaluating device which calculates the distance of the object therefrom.

15. A device according to any of claims 9 to 14, characterised in that the radiation source (10) is disposed at an angle to the object surface, a dividing mirror (28) is disposed in the path of rays (13) between the radiation source (10) and the object (11), and in that a double-slit diaphragm (32) is disposed behind the mirror (28) in the path of rays (14) of the spatially incoherent radiation emitted by the luminous spot (2).

16. A device according to claim 14 or 15, characterised in that a cylindrical collecting lens (33) is disposed between the optical element (32) generating the two luminous-spot images (25, 26).

17. A device according to any of claims 9 to 13, characterised in that in order to generate a number of illuminated-spot images, a birefringent optical element is disposed in the path of the spatially incoherent radiation (14) emitted by the luminous spot (2).

**Revendications**

1. Procédé de mesure d'écart entre un objet (11) et un point de référence, dans lequel

   - l'objet est soumis à un rayonnement électromagnétique à partir d'une source de rayonnement (10) dans un spot lumineux (2) et
   - le rayonnement partant du spot lumineux (2) est capté par une tête de mesure (15) et l'écart entre l'objet (11) et le point de référence est déterminé à partir de cela, caractérisé en ce que
   - l'objet (11) dans le spot lumineux (2) est excité par le rayonnement électromagnétique pour l'émission d'un rayonnement incohérent dans l'espace et
   - en ce que, pour déterminer l'écart, seule la fraction incohérente dans l'espace du rayonnement excité dans le spot lumineux (2) et émis est utilisée de façon sélective.

2. Procédé selon la revendication 1, caractérisé en ce que le matériau de l'objet dans le spot lumineux (2) est chauffé par le rayonnement électromagnétique et est excité pour l'émission d'un rayonnement thermique incohérent dans l'espace.

3. Procédé selon la revendication 1, caractérisé en ce que la surface de l'objet dans le spot lumineux (2) est excitée par le rayonnement électromagnétique pour l'émission d'un rayonnement incohérent dans l'espace, non thermique, tel que la luminescence, la fluorescence, la phosphorescence, la diffusion Raman ou la dispersion Brillouin.

4. Procédé selon l'une des revendications 1 à 3, caractérisé en ce que

le rayonnement cohérent provenant du spot lumineux (2) est séparé du rayonnement incohérent dans l'espace ou supprimé.

5. Procédé selon l'une des revendications 1 à 3, caractérisé en ce que, lors du fonctionnement en forme d'impulsions de la source de rayonnement (10), le rayonnement ré-émis dans le spot lumineux (2) n'est capté que dans les pauses d'impulsions.

6. Procédé selon l'une des revendications 1 à 5, caractérisé en ce que, pour la détermination de l'écart indépendamment de la forme et de la position du spot lumineux (2), au moins deux images de spot lumineux (25, 26) juxtaposées sont produites et en ce que l'écart entre l'objet (11) et le point de référence est déterminé à partir de l'intervalle de points homologues dans les deux images de spot lumineux (25, 26) égales et superposables.

7. Procédé selon la revendication 6, caractérisé en ce que l'écart des centres de gravité des deux images de spot lumineux (25, 26) égales et superposables est analysé pour la détermination de la distance de l'objet.

8. Procédé selon la revendication 6, caractérisé en ce que, par interpolation, les maxima des deux images de spot lumineux (25, 26) sont déterminés et la distance de l'objet est déterminé à partir de l'écart de ces deux maxima.

9. Dispositif de mesure d'écart entre un objet et un point de référence, composé

- d'une source de rayonnement (10) électromagnétique comprenant des éléments de focalisation pour la production d'un spot lumineux (2) local à la surface de l'objet (11),

- d'une tête de mesure (15) qui détecte le rayonnement provenant du spot lumineux, et

- d'éléments de calcul qui, à partir du rayonnement détecté à partir de la tête de mesure, calculent l'écart entre l'objet et le point de référence, caractérisé en ce que la source de rayonnement (10) est réalisée de façon adaptée au matériau de l'objet de telle façon qu'un rayonnement incohérent dans l'espace est émis par le spot lumineux (2) et en ce que la tête de mesure (15) contient des éléments de sélection (16, 17, 19) qui analysent uniquement le rayonnement (14) incohérent dans l'espace émis par le spot lumineux (2) en vue de calculer l'écart.

10. Dispositif selon la revendication 9, caractérisé en ce que la tête de mesure (15) contient, comme élément de sélection, un filtre chromatique (16) optique qui absorbe la fraction de rayonnement (13a) cohérente venant du spot lumineux (2).

11. Dispositif selon la revendication 9, caractérisé en ce que la tête de mesure (15) présente, comme élément de sélection, un photodétecteur (19) réagissant uniquement à la gamme d'ondes du rayonnement émis incohérent.

12. Dispositif selon la revendication 9, caractérisé en ce que la tête de mesure (15) est couplée à la source de rayonnement (1) par le biais d'un générateur d'impulsions (17) qui n'active l'unité d'analyse que quand la source de rayonnement (1) est hors circuit.

13. Dispositif selon l'une des revendications 9 à 12, caractérisé en ce que la tête de mesure (15) contient des éléments optiques et des éléments de calcul qui déterminent la distance de l'objet indépendamment de la forme, de la taille et des variations de position du spot lumineux (2).

14. Dispositif selon l'une des revendications 9 à 13, caractérisé en ce que la tête de mesure (15) contient des éléments (32, 19) optiques pour la production d'au moins deux images de spot lumineux (25, 26) sensiblement de forme identique ainsi que des éléments d'analyse qui déterminent respectivement un point dans l'une de ces images de spot lumineux, définissent l'intervalle entre des points homologues correspondants et conduisent à une unité d'analyse qui calcule à partir de cela la distance de l'objet.

15. Dispositif selon l'une des revendications 9 à 14, caractérisé en ce que la source de rayonnement (10) est disposée selon un angle par rapport à la surface de l'objet, en ce que, un miroir diviseur (28) est disposé sur le trajet des rayons (13) entre la source de rayonnement (10) et l'objet (11), et en ce que, sur le trajet des rayons (14) du rayonnement incohérent dans l'espace émis par le spot lumineux (2), un diaphragme à double fente (32) est disposé derrière le miroir diviseur (28).

16. Dispositif selon la revendication 14 ou 15, caractérisé en ce que, une lentille convergente (33) cylindrique est disposée entre l'élément (32) optique produisant les deux images de spot lumineux (25, 26).

17. Dispositif selon une des revendications 9 à 13, caractérisé en ce que, pour la production de plusieurs images de spot lumineux, un élément optique biréfringent est disposé sur le trajet des rayons du rayonnement (14) incohérent dans l'espace émis par le spot lumineux (2).

# Fig. 1

# Fig. 3

Fehler bei der Entfernungsmessung (µm)

verschiedene Meßpunkte auf ebenem Objekt

# Fig. 2

# Fig. 4

# Fig. 5

# Fig. 6

# Fig. 7

ORT x

ORT
25
$x_2$
$x_1$

ORT
26
$x_2'$
$x_1'$

$s = s(z)$

27

EMISSION DES
LEUCHTFLECKS

z

# Fig. 8

10

13

30
32

11

2

ORT

25

s

13a
14
28

16

33

19

31

26

BESTRAH-
LUNGS-
STÄRKE

z

# Fig. 9

# Fig. 10